# EUROPEAN PATENT APPLICATION

(11) **EP 4 053 785 A1**
(43) Date of publication of application: **07.09.2022**
(21) Application number: 21382176.2
(22) Date of filing: 02.03.2021
(51) Int. Cl.: G06T 5/00, G06N 3/02

(54) **A METHOD, SYSTEM AND COMPUTER PROGRAMS TO AUTOMATICALLY TRANSFORM AN IMAGE**

(71) Applicant: Stageinhome Technology Lab, S.L., 08039 Barcelona (ES)
(72) Inventor: TERRADAS ROBLEDO, Rafael, 08039 Barcelona (ES); DOMINGO GREGORIO, Pablo, 08039 Barcelona (ES); GRAU GASULLA, Martí, 08039 Barcelona (ES); ALARCÓN COT, Eduardo José, 08039 Barcelona (ES); RUIZ HIDALGO, Javier, 08039 Barcelona (ES)
(74) Representative: Carbonell Callicó, Josep

(57) **Abstract**

A method, a system and computer programs to automatically transform an image are disclosed. The method comprises receiving, by a processing unit, at least one image and processing the received image, by applying a Neural Network therein, to obtain an image representation of the received image; receiving, by an encoding unit, one or more references and encoding them into features as a condition for a conditional Neural Network; and transforming, by applying the conditional Neural Network, the obtained image representation into a resulting conditioned image based on said conditio

## Description

### Technical Field

The present invention is directed, in general, to a method and a system to automatically transform an image using neural networks. More specifically, the invention relates to a controllable image generation through an image representation and several conditions using a conditional Neural Network.

### Background of the Invention

Computer image transformation refers to the process of mapping one input image to another image after performing some operations. Depending on the transform chosen, the input and output images may appear entirely different and have different interpretations.

Neural Networks have become a powerful tool for a wide range of applications. The Neural Networks span a wide field of applications ranging from classification problems, segmentation and positioning problems and even generation of any type of data.

Generative Neural Networks have been extensively researched in the image generation field over the last few years due to the realism and high resolution quality of the synthesized images these networks can reach. These deep generative Neural Networks can already generate a variety of realistic image domains such as human faces, animals, landscapes and even indoor and outdoor scenes.

A common problem in deep generative Neural Networks is the point where they start from, a random sample in a particular dimensional space that does not allow generating an exact real existing image, but a random image of the same domain that has been trained for. Moreover, these generative Neural Networks do not allow having control over the image generation, meaning that it is difficult to modify particular generated parts or attributes of the image.

Solutions for these problems include, algorithms embedding a given input image into the space representation that generative Neural Networks can deal with. In addition, these embedding's would enable semantic image modifications that can be applied to existing images.

### Description of the Invention

To that end, embodiments of the present invention provide, according to one aspect, a method to automatically transform an image. In the proposed method, the image is transformed while it is conditioned by a plurality of references (i.e. any type of data).

The method comprises receiving, by a processing unit, at least one image and processing the received image to obtain an image representation thereof (i.e. an intermediate representation of the initial image that captures high level features and low level properties of the image and that is structured in an understandable way for a conditional Neural Network such as a deep generative Neural Network). The method also includes receiving, by an encoding unit, one or more references (e.g. other images, text, labels, combinations thereof, or even other data describing how the received image should be transformed) and encoding the received one or more references into one or more features, the latter being further provided to a conditional Neural Network as a condition(s). In addition, the method further applies the conditional Neural Network to transform the obtained image representation into a resulting conditioned image based on said condition(s).

The processing of the received image to obtain the image representation comprises applying a Neural Network to the received image.

The cited features can comprise regions or masks of attributes to modify; images features specifying a desired color, style or detail for the image; and/or valuable information such as structural information as space metrics, measurements and shapes or labels of particular features.

In an embodiment, the encoding unit comprises a plurality of encoders, wherein each one of the encoders is fed by one or more references and extracts a plurality of features.

In an embodiment, the conditional Neural Network comprises one or more deep convolutional Neural Networks, which can be trained via an adversarial training technique or a semi-supervised learning algorithm, among other techniques/algorithms.

Embodiments of the present invention also provide, according to another aspect, a system to automatically transform an image. The system comprises a processing unit and a memory which stores computer readable instructions executable by the processing unit to receive at least one image and process the received image, by applying a Neural Network, to obtain an image representation thereof; an encoding unit configured to receive one or more references, encode the received one or more reference into one or more features and to provide the one or more features to a conditional Neural Network as one or more conditions; wherein the computer readable instructions are further configured to apply the conditional Neural Network to transform the obtained image representation into a resulting conditioned image based on said condition(s).

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Thus, present invention allows an input image to be converted into an image representation, wherein the image representation can be understood by a conditional Neural Network (e.g. a deep generative Neural Network) and conditioned by a plurality of features from their respective reference.

### Brief Description of the Drawings

The previous and other advantages and features will be more fully understood from the following detailed description of embodiments, with reference to the attached figures, which must be considered in an illustrative and non-limiting manner, in which:

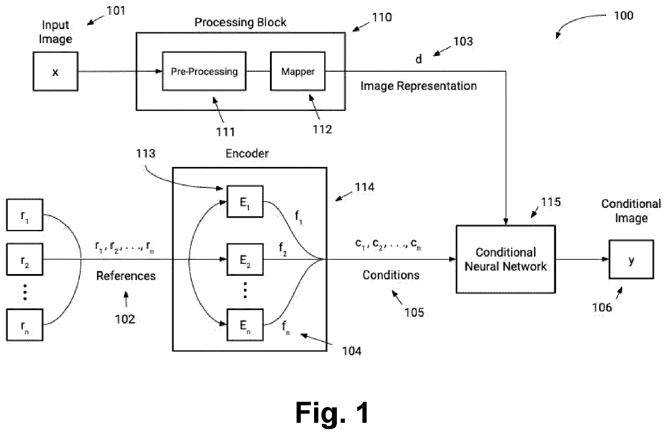

FIG. 1 is a block diagram of an automatic image transformation system based on multiple conditions, according to an embodiment.

### Detailed Description of Preferred Embodiments

Present invention provides an automatic image transformation method and a corresponding system that use a conditional Neural Network and that include an image processing unit/block and an encoding unit. As a result, a transformed image is generated to match an image representation from an input image and one or more conditions from respective references (i.e. any type of data).

The proposed invention is designed to enable quality, variability but also diversity at the time of transforming an inputted/received image. When transforming an image, some parts of it might want to be changed, but not completely, so it is still recognizable. In order to achieve this, three blocks/steps are designed. One to capture the relevant information that needs to stay in the transformed image so the essence of the input image is preserved. Another to capture what attributes need to change from the input image, and lastly the entity that takes what needs to be preserved and what needs to be changed and transforms the image accordingly.

Referring now to FIG. 1, therein a particular embodiment of the invention is shown. In this case, the proposed automatic image transformation system 100 includes a processing block 110; an encoding unit 114; and a conditional Neural Network 115. The system 100 transforms the appearance of an input image 101 into another to match certain conditions 105. These conditions 105 come from encoding user-provided references 102, which determine how the transformed image 106 should look like.

The inputs in this case are an image 101 and one or more references 102. Said input image 101 can be any image which wants to be transformed and the references 102 can be understood as other images, text or any other information describing how the input image 101 should be transformed.

To produce the transformation, the system uses the cited conditional Neural Network 115, which is fed with two inputs: an intermediate image representation 103 which can be understood as a vector; and a list of conditions 105, which can be one or more, depending on the number of attributes the desired transformed image is wanted to contain.

The intermediate image representation 103 is obtained using a processing phase, which is capable of capturing high and low level features from said input image 101 and then map said features into a structured vector "d" 103 set to be understandable for said conditional Neural Network 115.

The condition(s) 105 is/are obtained using the encoding unit 114, which is particularly formed by one or more encoders 113 capable of extracting features and encode them into vectors. These features could be i) regions or masks of attributes to modify; ii) images allusion, the allusion specifying a desired color, style or detail for the image; and/or iii) valuable information such as structural information such as space metrics, measurements and shapes or labels of particular features.

With continued reference to FIG.1, the processing block 110 can take the input image 101, which content could be anything, and can produce an intermediate image representation "d" 103 of the image. The intermediate image representation 103 can capture the relevant features that need to be preserved on the final transformation into a vector; this may generally include the structure of the image (point marks, locations, shapes, etc.). The intermediate representation 103 can be provided to the conditional Neural Network 115. In this embodiment, the processing block 110 particularly comprises a pre-processing unit/step 111 which is configured to adapt the input image 101 to the mapper 112, wherein the pre-processed image is mapped into the intermediate image representation 103.

The encoders 113 can be comprised of one-hot encoding or the identity operation, in the case of categorical variables, or one or more deep Neural Networks, which can take one or more references "rₙ" 102. Each encoder "Eₙ" 113 can encode one or more references 102. Said references 102 can be another image, a label describing the desired attributes for the transformed image or any other characteristics that specify what needs to be changed from the input image. Each encoder 113 can produce features 104 into a vector which is then provided to the conditional Neural Network 118 as a condition. Therefore, as the number of conditions does not have to be the same as the number of references 102, each condition "cₙ" 105 can be the encoding of one or more references 102. Due to the fact that multiple types of data can be encoded, the encoders 113 can be built up being all types of neural networks specialized on the type of data.

The conditional Neural Network 115 can take the intermediate image representation 103 and the one or more conditions 105. Said conditional Neural Network 115 can be comprised of one or more deep convolutional neural networks. In an embodiment, the one or more Neural Networks of the conditional Neural Network 115 can be trained using adversarial training, or may be trained using other suitable training techniques. These techniques may be employed to train the conditional Neural Network 115 using semi-supervised learning algorithms. In particular, to train this network, first adversarial min max game can be employed to train the conditional Neural Network 115 in order to produce synthetic images with the preserved characteristics captured on the processing block 110. To apply the conditions 105, paired data can be employed to train the conditional Neural Network 115 to introduce variations into the generated image. These variations should be similar according to the references 102 entered to the system 100. Said conditional Neural Network 115 can provide a conditional image 106. The conditional image 106 is transformed to preserve the relevant characteristics captured on the intermediate image representation 103 but also to match the imposed conditions 105 formed by the captured features from the encoders 113.

According to a particular example, the transformation image system 100 can be configured to transform an image 101 of a space with its own structure and style such as, for example, an image of an object, and convert it to the same object but with a different style. The style being defined by one or more references 102 defining how the change should be made. In this example, the processing block 110 can first adapt the input image 101 to have the corresponding dimensions needed for the system using the pre-processing phase 111 and then capture the general structure of the object conjunctively with the location details for example, mapping all this information into the intermediate representation 103 using the mapper neural network 112. In the same embodiment one possible reference 102 can be the image of another object with a totally different style or a text indicating how a certain object should change. The references 102 are encoded into features 104. Said features are then grouped to form the conditions 105 for the conditional Neural Network 115. Finally the intermediate image representation 103 and the encoded features 104 as conditions 105 can be provided to the conditional Neural Network 115 which can transform the input object image into a conditioned image 106, which must match the structure captured on the intermediate image representation 103 but also match the desired features provided by the references 102 and encoded into features 104 to use them as conditions 105 for the conditional Neural Network 115.

Various aspects of the method for automatically transform an image, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Nonvolatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A method to automatically transform an image, comprising:
receiving, by a processing unit (110), at least one image (101) and processing the received image (101), by applying a Neural Network therein, to obtain an image representation (103) of the received image (101);
receiving, by an encoding unit (114), one or more references (102), and encoding the received one or more references (102) into one or more features (104), the latter being further provided to a conditional Neural Network (115) as one or more conditions (105); and
transforming, by applying the conditional Neural Network (115), the obtained image representation (103) into a resulting conditioned image (106) based on said one or more conditions (105).

2. The method of claim 1, wherein the one or more references (102) comprise other images, a text or a label describing desired attributes and/or other characteristics specifying what needs to be changed from the received image (101).

3. The method of any one of the previous claims, wherein the features (104) comprise:
regions or masks of attributes to modify; and/or
images features specifying a desired color, style or detail for the received image (101); and/or
structural information including space metrics, measurements and shapes or labels of particular features.

4. The method of any one of the previous claims, wherein the encoding unit (114) comprises a plurality of encoders (113), wherein each one of the encoders (113) is fed by one or more references (102) and extracts a plurality of features (104).

5. The method of any one of the previous claims, wherein the conditional Neural Network (115) is comprised of one or more deep convolutional Neural Networks.

6. The method of claim 5, further comprising training each one of the deep convolutional Neural Networks via an adversarial training technique or a semi-supervised learning algorithm.

7. A system to automatically transform an image, comprising:
a processing unit (110) and a memory which stores computer readable instructions executable by the processing unit (110) to receive at least one image (101) and process the received image (101), by applying a Neural Network therein, to obtain an image representation (103) of the received image (101);
an encoding unit (114) configured to receive one or more references (102), to encode the received one or more references (102) into one or more features (104) and to provide the one or more features (104) to a conditional Neural Network (115) as one or more conditions (105);
the computer readable instructions being further configured to apply the conditional Neural Network (115) to transform the obtained image representation (103) into a resulting conditioned image (106) based on said one or more conditions (105).

8. The system of claim 7, wherein the encoding unit (114) comprises a plurality of encoders (113), wherein each one of the encoders (113) is adapted to received one or more references (102) and to extract a plurality of features (104).

9. The system of claim 7, wherein the conditional Neural Network (115) is comprised of one or more deep convolutional Neural Networks.

10. A computer program product to automatically transform an image, the computer program product comprising a non-transitory computer-readable medium including instructions for causing a computer to:
obtain an image representation from a received image by applying a Neural Network to the received image;
encode one or more received references into one or more features that are used as one or more conditions for a conditional Neural Network; and
apply the conditional Neural Network to transform the obtained image representation into a resulting conditioned image based on said one or more conditions.
